# EUROPÄISCHE PATENTSCHRIFT

(11) **EP 1 861 442 B1**
(45) Veröffentlichungstag und Bekanntmachung des Hinweises auf die Patenterteilung: **03.12.2008**
(21) Anmeldenummer: 06708776.7
(22) Anmeldetag: 15.03.2006
(51) Int. Cl.: C08G 2/06

(54) **VERFAHREN ZUR HERSTELLUNG VON POLYOXYMETHYLENEN**
METHOD FOR PRODUCING POLYOXYMETHYLENES
PROCEDE DE FABRICATION DE POLYOXYMETHYLENES

(30) Priorität: 16.03.2005 DE 102005012482
(43) Veröffentlichungstag der Anmeldung: 05.12.2007
(73) Patentinhaber: BASF SE, 67056 Ludwigshafen (DE)
(72) Erfinder: URTEL, Melanie, 68165 Mannheim (DE); SCHWITTAY, Claudius, 69121 Heidelberg (DE); ZÖLLNER, Knut, 68163 Mannheim (DE); ASSMANN, Jens, 68535 Edingen-neckarhausen (DE); BLINZLER, Marko, 68163 Mannheim (DE)
(86) Internationale Anmeldenummer: PCT/EP2006/060751
(87) Internationale Veröffentlichungsnummer: WO 2006/097487

(56) Entgegenhaltungen:
- EP-A- 0 325 052
- WO-A-20/05012380
- DE-A1- 10 340 780
- GB-A- 1 484 063

## Beschreibung

Die Erfindung betrifft ein verbessertes Verfahren zur Herstellung von Polyoxymethylenen.

Aus dem Stand der Technik sind verschiedene Verfahren bekannt, welche vorwiegend Protonendonatoren/protische Verbindungen in der Reaktionsmischung enthalten:

In der DE-A 361 77 54 oder DE-A 292 07 03 werden beispielsweise Alkohole als Regler/Kettenüberträger eingesetzt. In der Regel wird das Abbruchmittel in alkoholischen Lösungsmitteln in die Mischung eingeführt:
- DE-A 361 77 54 Hydrolyse mit H₂O/Alkohol-Mischungen
- DE-A 250 99 24 NEt₃ wird in MeOH/H₂O zugegeben (NEt₃=Triethylamin)
- JP-A 59/197 415 NEt₃ wird in Ethanol zugegeben
- WO 97/24 384 NEt₃ wird in Wasser zugegeben
- EP-A 999 224 Desaktivator kann in wässriger Phase vorliegen

Laut Lehrbüchern wie Echte, Handbuch der Polymerchemie, VCH, Weinheim, 1993, Kap. 8.5.2, werden POM-Copolymere nach kationischer Polymerisation alkalisch neutralisiert.

Weiterhin können POM-Polymere auch mit Wasserdampf entgast werden: DE-A 370 73 90.

Aus der EP-A 678 535 ist bekannt, dass der Wassergehalt im Monomergemisch vorteilhaft zu begrenzen ist. In den weiteren Schritten der Polymerisation werden Leichtsieder und H-Donatoren nicht begrenzt.

In den o.g. Schriften werden als Lösungsmittel z.B. der Katalysatoren leichtsiedende inerte Lösungsmittel (Siedepunkt unterhalb von 140°C) eingesetzt, da diese einfacher zu entfernen sind.

Die Polymerisation von Trioxan liefert in der Regel Ausbeuten von < 100 %. Bei der Schmelzepolymerisation werden beispielsweise nur 70 %ige Umsätze erreicht. Die nicht-umgesetzten Restmonomeren werden in der Regel gasförmig abgezogen und rezykliert. Diese Rückführung der Brüden wird erheblich erleichtert, wenn sie weitestgehend frei von Leichtsiedern sind. In diesem Fall kann eine aufwändige Reinigung der Brüden vermieden werden. Sind die Brüden frei von Protonendonatoren, so tritt keine (Gasphasen-)Polymerisation ein, die zu störenden Belägen in den Zuleitungen führt.

Ein maßgebliches Gütekriterium für Polyoxymethylene ist außerdem der RestFormaldehydgehalt (Rest-FA). Wünschenswert ist es, den Rest-FA auf deutlich < 10 ppm zu reduzieren. Ein geringer Rest-FA ist gleichbedeutend mit einer hohen thermischen Stabilität des Polymers (i.e. mit einem geringen Massenverlust bei thermischer Belastung).

Hierfür ist es entscheidend, dass die Polymerketten keine instabilen Endgruppen aufweisen.

Der vorliegenden Erfindung lag daher die Aufgabe zugrunde, die instabilen Kettenenden sowie Rest-FA zu minimieren, die thermische Stabilität des Polymeren zu erhöhen und die Rückführung der Monomeren zu vereinfachen, sowie die Standzeiten der Leitungen und Apparaturen für die Rückführung zu verlängern.

Demgemäß wurde ein Verfahren zur Herstellung von Polyoxymethylenen durch kationische Polymerisation der Monomeren a) in Gegenwart von Initiatoren b) sowie gegebenenfalls in Gegenwart von Reglern c) und anschließender Desaktivierung und Abtrennung der Polymeren gefunden, welches dadurch gekennzeichnet ist, dass bei der gesamten Polymerisation die gesamte Menge der Protonendonatoren kleiner 5.000 ppm beträgt. Bevorzugte Ausführungsformen sind den Unteransprüchen zu entnehmen.

Überraschenderweise kann die Stabilität der POM-Ketten(enden) erheblich erhöht werden, wenn bei der Polymerisation der Anteil der Protonendonatoren im genannten Mengenbereich begrenzt wird. Die Aufarbeitung kann effektiver und verschleißfreier durchgeführt werden, insbesondere bei einer zusätzlichen Begrenzung der Leichtsieder - außer den eingesetzten Monomeren - im Reaktionssystem.

Der Begriff "gesamte Polymerisation" umfasst alle Verfahrensschritte vom Monomeransatz bis zum Granulat.

Das Verfahren kann grundsätzlich auf jeglichen Reaktoren mit hoher Mischwirkung durchgeführt werden, wie beispielsweise Schalen, Pflugscharmischern, Rohrreaktoren, List-Reaktoren, Knetern, Rührreaktoren, Extrudern und Bandreaktoren.

Geeignete Reaktoren sind beispielsweise: Kenics (Chemineer Inc.); interfacial surface Generator-ISG und low pressure drop mixer (Ross Engineering Inc); SMV, SMX, SMXL, SMR (Sulzer Koch-Glitsch); Inliner series 45 (Lightnin Inc.); CSE-Mischer (Fluitec Georg AG).

Die entstehenden POM-Polymerisate sind dem Fachmann an sich bekannt und in der Literatur beschrieben.

Ganz allgemein weisen diese Polymere mindestens 50 mol-% an wiederkehrenden Einheiten - CH₂O - in der Polymerhauptkette auf.

Die Homopolymeren werden im allgemeinen durch die Polymerisation von Monomeren a) wie Formaldehyd oder Trioxan herstellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten -CH₂O- noch bis zu 50, vorzugsweise 0,01 bis 20, insbesondere 0,1 bis 10 mol-% und ganz besonders bevorzugt 0,5 bis 3 mol-% an wiederkehrenden Einheiten enthalten. 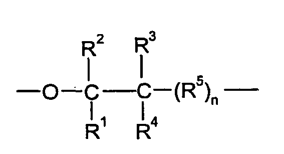 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine - CH₂-, -CH₂O -, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 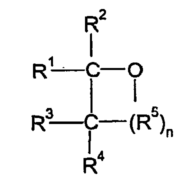 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 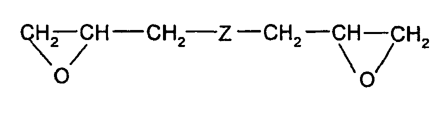 und/oder 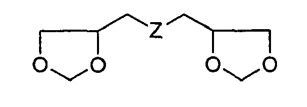 wobei Z eine chemische Bindung, -O-, -ORO- (R C₁- bis C₈-AlkylAn oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden C-C-oder -O-CH₃-Bindungen aufweisen, werden besonders bevorzugt.

Die bevorzugten Polyoxymethylencopolymere haben Schmelzpunkte von mindestens 150°C und Molekulargewichte (Gewichtsmittelwert) M_{w} im Bereich von 5.000 bis 300.000, vorzugsweise von 7.000 bis 250.000.

Insbesondere bevorzugt sind POM-Copolymerisate mit einer Uneinheitlichkeit (M_{w}/Mₙ) von 2 bis 15, bevorzugt von 3 bis 12, besonders bevorzugt von 3,5 bis 9. Die Messungen erfolgen in der Regel über GPC/SEC (size exclusion chromatography), der Mₙ-Wert (Zahlenmittel des Molekulargewichtes) wird im allgemeinen bestimmt mittels GPC/SEC (size exclusion chromatography).

Die gemäß dem Verfahren erhältlichen POM-Polymerisate weisen bevorzugt eine unimodale Molekulargewichtsverteilung auf, wobei der niedermolekulare Anteil gering ist.

Die Polyoxymethylenhomo- oder -copolymerisate weisen insbesondere Quotienten der d₅₀/d₁₀-Werte (bezogen auf M_{w}) von 2,25 bis 5,5, vorzugsweise von 2,75 bis 5 und insbesondere 3,2 bis 4,5 auf. Der Quotient der d₉₀/d₅₀-Werte (bezogen auf M_{w}) beträgt vorzugsweise 1,25 bis 3,25, bevorzugt 1,75 bis 2,75 und insbesondere 2 bis 2,5.

Die POM-Polymerisate weisen sehr geringe Anteile an niedermolekularen Anteilen auf und vorzugsweise eine asymmetrische, unimodale Verteilungskurve auf, wobei die Differenz der o.g. Quotienten d₅₀/d₁₀ zu d₉₀/d₅₀ mindestens 0,25, bevorzugt 1 bis 3 und insbesondere 1,0 bis 2,3 beträgt.

Die Molmassenbestimmung durch GPC (Gelpermeationschromatographie):

Elutionsmittel: Hexafluorisopropanol + 0,05 % Trifluoressigsäure-Kaliumsalz Säulentemperatur: 40°C
Durchflussgeschwindigkeit: 0,5 mL/min
Detektor: Differentialrefraktometer Agilent G1362A.

Die Kalibrierung erfolgte mit eng verteilten PMMA-Standards der Fa. PSS mit Molekulargewichten von M = 505 bis M = 2.740.000. Außerhalb dieses Intervalls liegende Elutionsbereiche wurden durch Extrapolation geschätzt.

Unter einem d₅₀ Wert versteht der Fachmann in der Regel den Wert, bei welchem 50 % des Polymerisates ein kleineres M_{w} aufweisen und entsprechend 50 % ein größeres M_{w} aufweisen.

Bevorzugt weisen die gemäß dem erfindungsgemäßen Verfahren erhältlichen Roh-Polyoxymethylene einen Restformaldehydgehalt gemäß VDA 275 im Granulat von maximal 1 %, bevorzugt maximal 0,1 %, vorzugsweise maximal 0,01 % auf.

Das erfindungsgemäße Verfahren wird bevorzugt für die Homo- und die Copolymerisation von Trioxan angewandt. Als Monomeres a) kann aber grundsätzlich jegliches vorstehend beschriebene Monomere, beispielsweise auch Tetroxan eingesetzt werden.

Die Monomeren, beispielsweise Trioxan, werden bevorzugt im geschmolzenen Zustand zudosiert, im allgemeinen bei Temperaturen von 60 bis 180°C.

Vorzugsweise beträgt die Temperatur der Reaktionsmischung bei der Dosierung 62 bis 170°C, insbesondere 120 bis 160°C.

Die Molekulargewichte des Polymeren können gegebenenfalls durch die bei der (Trioxan)polymerisation üblichen Regler c) auf die angestrebten Werte eingestellt werden. Als Regler kommen Acetale bzw. Formale einwertiger Alkohole, die Alkohole selbst sowie die als Kettenüberträger fungierenden geringen Mengen Wasser, deren Anwesenheit als Protonendonatoren sich in der Regel nie vollständig vermeiden lässt, in Frage. Die Regler werden in Mengen von 10 bis 10.000 ppm, vorzugsweise von 50 bis 5 000 ppm, eingesetzt. Die Menge derartiger Regler sollte erfindungsgemäß wie unten aufgeführt begrenzt werden.

Als Initiatoren b) (auch als Katalysatoren bezeichnet) werden die bei der (Trioxan)polymerisation üblichen kationischen Starter verwendet. Es eignen sich Protonensäuren, wie fluorierte oder chlorierte Alkyl- und Arylsulfonsäuren, z.B. Perchlorsäure, Trifluormethansulfonsäure oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Die Katalysatoren (Initiatoren) werden in Mengen von etwa 0,001 bis 1.000 ppm, vorzugsweise 0,01 bis 500 ppm und insbesondere von 0,05 bis 10 ppm eingesetzt. Im allgemeinen empfiehlt es sich, den Katalysator in verdünnter Form zuzusetzen, vorzugsweise in Konzentrationen von 0,005 bis 5 Gew.-%. Als Lösungsmittel hierfür können inerte Verbindungen wie aliphatische, cycloaliphatische Kohlenwasserstoffe z.B. Cyclohexan, halogenierte aliphatische Kohlenwasserstoffe, Glykolether, zyklische Carbonate, wie Propylencarbonat oder Lactone, z.B. γ-Butyrolacton oder Ketone wie 6-Undecanon, sowie Triglyme (Triethylenglykoldimethylether) und 1,4-Dioxan verwendet werden. Die Mengen derartiger Leichtsieder sollen erfindungsgemäß wie unten ausgeführt begrenzt sein.

Monomere sowie Comonomere a), Initiatoren b) und gegebenenfalls Regler c) können auf beliebige Weise vorgemischt oder auch getrennt voneinander dem Polymerisationsreaktor zugegeben werden. Ferner können die Komponenten a), b) und/oder c) zur Stabilisierung sterische gehinderte Phenole enthalten wie in EP-A 129 369 oder EP-A 128 739 beschrieben.

Um den Anteil an instabilen Endgruppen zu minimieren, hat es sich als vorteilhaft erwiesen den Initiator b) im Regler c) vor dessen Zugabe zum Monomeren a) und gegebenenfalls Comonomer a) zu lösen.

Die Polymerisation wird vorzugsweise in einem Rohrreaktor durchgeführt, welcher eine Mischungszone, eine Polymerisationszone und eine Desaktivierungszone aufweist.

Erfindungsgemäß wird direkt anschließend an die Polymerisation die Polymerisationsmischung desaktiviert, vorzugsweise ohne dass eine Phasenveränderung erfolgt.

Die Desaktivierung der Katalysatorreste erfolgt in der Regel durch Zugabe von mindestens einem Desaktivator d).

Geeignete Desaktivatoren sind z.B. Ammoniak, aliphatische und aromatische Amine, basisch reagierende Salze, wie Soda und Borax. Diese werden üblicherweise den Polymeren in Mengen von vorzugsweise bis zu 1 Gew.-% zugesetzt.

Zu den organischen Verbindungen der (Erd-)Alkalimetalle, vorzugsweise des Natriums gehören die entsprechenden Salze von (cyclo)aliphatischen, araliphatischen oder aromatischen Carbonsäuren mit vorzugsweise bis zu 30 C-Atomen und vorzugsweise 1 bis 4 Carboxylgruppen. Beispiele hierfür sind: Alkalimetallsalze der Ameisensäure, Essigsäure, Propionsäure, Buttersäure, Isobuttersäure, Caprylsäure, Stearinsäure, Cyclohexancarbonsäure, Bernsteinsäure, Adipinsäure, Korksäure, 1,10-Decandicarbonsäure, 1,4-Cyclohexandicarbonsäure, Terephthalsäure, 1,2,3-Propantricarbonsäure, 1,3,5-Cyclohexantricarbonsäure, Trimellithsäure, 1,2,3,4-Cyclopentantetracarborisäure, Pyromellithsäure, Benzoesäure, substituierten Benzoesäuren, Dimersäure und Trimersäure sowie neutrale und teilneutrale Montanwachssalze oder Montanwachsestersalze (Montanate). Auch Salze mit andersgearteten Säureresten, wie z.B. Alkali-Paraffin-, Alkali-Olefin- und Alkali-Arylsulfonate oder auch Phenolate sowie Alkoholate, wie z.B. Methanolate, Ethanolate, Glykolate, können erfindungsgemäß eingesetzt werden.

Bevorzugt werden Natriumsalze von Mono-und Polycarbonsäuren, insbesondere die aliphatischer Mono- und Polycarbonsäuren, vorzugsweise solchen mit 2 bis 18 C-Atomen, insbesondere mit 2 bis 6 C-Atomen und bis zu vier, vorzugsweise bis zu zwei Carboxylgruppen, sowie Natriumalkoholate mit vorzugsweise 2 bis 15, insbesondere 2 bis 8 C-Atomen verwendet. Beispiele besonders bevorzugter Vertreter sind Natriumacetat, Natriumpropionat, Natriumbutyrat, Natriumoxalat, Natriuimmalonat, Natriumsuccinat, Natriummethanolat, Natriumethanolat, Natirumglykonat. Ganz besonders bevorzugt ist Natriummethanolat, welches besonders vorteilhaft in einer Menge von 1-5 fach äquimolar zur eingesetzten Komponente b) eingesetzt wird. Es können auch Gemische verschiedener (Erd-)Alkalimetall-Verbindungen eingesetzt werden, wobei auch Hydroxide einsetzbar sind.

Weiterhin sind Erdalkalialkyle als Desaktivatoren d) bevorzugt, welche 2 bis 30 C-Atome im Alkylrest aufweisen. Als besonders bevorzugte Metalle seinen Li, Mg und Na genannt, wobei n-Butyllithium insbesondere bevorzugt ist.

Bevorzugte Desaktivatoren d) sind solche der Formel I 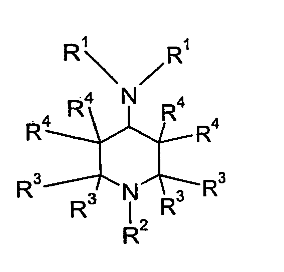
wobei R¹, R³, R⁴ und R⁵ unabhängig voneinander Wasserstoff oder eine
C₁-C₁₀-Alkylgruppe und
R² Wasserstoff oder eine C₁-C₁₀-Alkylgruppe oder O-R⁵ bedeutet.

Bevorzugte Reste R¹ bis R⁵ sind unabhängig voneinander Wasserstoff oder eine C₁-C₄-Alkylgruppe, wie Methyl, Ethyl, n-Propyl, i-Propyl, n-Butyl, 1-Butyl, s-Butyl, t-Butyl.

Insbesondere bevorzugte Desaktivatoren d) sind substituierte N-haltige Heterozyklen, insbesondere Derivate des Piperidins, wobei Triacetondiamin (4-Amino-2,2,6,6-Tetramethylpiperidin) besonders bevorzugt ist.

Der Desaktivator wird, bezogen auf den Durchsatz an Trioxan in Mengen von 0,001 bis 25 ppm, bevorzugt 0,01 bis 5 ppm, insbesondere 0,05 bis 2 ppm zudosiert. Der Desaktivator liegt vorzugsweise verdünnt in einem der nachstehend genannten Träger/- Lösungsmittel vor. Die Konzentration des Desaktivators im Träger/Lösungsmittel beträgt 0,001 bis 10 %, bevorzugt 0,01 bis 5 %, insbesondere 0,05 bis 2 %, ganz besonders bevorzugt 0,1 bis 1 %.

Bevorzugt wird der Desaktivator d) in einem aprotischen, nicht aromatischen Lösungsmittel zugegeben, beispielsweise den vorstehend genannten Monomeren und Comonomeren wie Dioxolan, Trioxan, Butandiolformal, Ethylenoxid oder oligomere bis polymere Polyacetale.

In einer besonders bevorzugten Ausführungsform des erfindungsgemäßen Verfahrens wird der Desaktivator d) in einer Trägersubstanz mit Etherstruktureinheiten in die Polymerisationsmischung zugegeben.

Vorzugsweise eignen sich Trägersubstanzen, die dieselben Struktureinheiten aufweisen, die im jeweilig herzustellenden POM-Polymerisat vorhanden sind. Hierunter sind insbesondere die vorstehend aufgeführten Monomeren a) zu verstehen sowie oligomeres bis polymeres Polyoxymethylen oder Polyacetale.

Die vorzugsweise flüssige Zugabe erfolgt bei Temperaturen von 140 bis 220°C.

Werden als Trägersubstanzen oligomere oder polymere POM-Polymerisate verwendet, ist eine Zugabe in flüssiger Form bei Temperaturen von 160 bis 220°C ebenso bevorzugt. Derartige Polymerisate können gegebenenfalls übliche Additive enthalten. Zur Dosierung derartiger Schmelzen der Trägersubstanzen, welche die Desaktivatoren d) enthalten, werden vorzugsweise Vorrichtungen wie Seitenextruder, Stopfschnecke, Schmelzpumpe etc eingesetzt.

Anschließend überführt man in der Regel das entstandene Polymerisat in eine Entgasungsvorrichtung.

Anschließend kann das entsprechende Polyoxymethylenpolymerisat mit üblichen Additiven wie Stabilisatoren, Kautschuken, Füllstoffen usw. in üblicher Weise weiterverarbeitet werden.

Erfindungsgemäß soll bei der gesamten Polymerisation die gesamte Menge der Protonendonatoren kleiner 5.000 ppm, vorzugsweise 0,1 bis 2.000 ppm, insbesondere 1 bis 1.000 ppm und ganz besonders bevorzugt 10 bis 750 ppm betragen.

Bevorzugt werden Protonendonatoren mit mindestens einer OH-Gruppe eingesetzt. Insbesondere weisen diese ein Molgewicht < 250 g/mol, bevorzugt < 200 g/mol auf.

Unter Protonendonatoren versteht man gemäß Brönstedt/Lowry Verbindungen, die Protonen abgeben können (siehe Römpp Chemie Lexikon, 9. Auflage 1992, S. 3958 und 3959). Hierzu zählen insbesondere gemäß der erfindungsgemäßen Fahrweise aliphatische/aromatische Alkohole (Lösungsmittel für Regler c) und auch d)), welche gesättigt oder ungesättigt sein können, sowie Wasser oder Wasser enthaltende Lösungen von Reaktanden wie auch die vorstehend genannten (Lewis)Säuren als Initiatoren b).

Um diese Mengenbegrenzungen einzuhalten, ist es vorteilhaft insbesondere als Kettenregler c) ein Formal wie Methylal oder Butylal einzusetzen. Weiterhin ist es vorteilhaft, als Lösungsmittel für den Initiator b) oder das Abbruchmittel d) die vorstehenden Trägersubstanzen (mit Ethereinheiten) z.B. Lactone wie γ-Butyrolacton, Ketone wie 6-Undecanon oder cyclische Kohlensäureester einzusetzen.

Als cyclische Kohlensäureester werden vorzugsweise solche mit 5 Ringgliedern verwendet, insbesondere Verbindungen der Formel 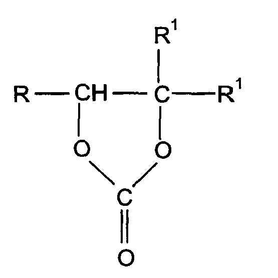 in der R ein Wasserstoffatom, einen Phenylrest oder einen niederen Alkylrest, vorzugsweise mit 1, 2 oder 3 Kohlenstoffatomen, und R¹ jeweils ein Wasserstoffatom oder einen niederen Alkylrest, vorzugsweise mit 1, 2 oder 3 Kohlenstoffatomen, bedeuten. Als Beispiele seien genannt: Ethylenglykolcarbonat, 1,2-Propylenglykolcarbonat, 1,2-Butylenglykolcarbonat, 2,3-Butylenglykolcarbonat, Phenylethylenglykolcarbonat, 1-Phenyl-1,2-propylenglykolcarbonat und 2-Methyl-1,2-propylenglykolcarbonat (1,3-Dioxolan-2-on, 4-Methyl-1,3-dioxolan-2-on, 4-Ethyl-1,3-dioxolan-2-on, 4,5-Dimethyl-1, 3-dioxolan-2-on, 4-Phenyl-1,3-dioxolan-2-on, 4-Methyl-5-phenyl-1,3-dioxolan-2-on, und 4,4-Dimethyl-1,3-dioxolan-2-on).

Die erfindungsgemäß verwendeten cyclischen Kohlensäureester haben einen Reinheitswert von mindestens 95 %, vorzugsweise von mindestens 99,9 %; sie sollen im wesentlichen wasser- und alkalifrei sein. Die Reinigung erfolgt im allgemeinen durch Destillation bei vermindertem Druck oder durch Absorption oder durch Adsorption. Soweit die gereinigten cyclischen Kohlensäureester unter Normalbedingungen im festen Aggregatzustand vorliegen, müssen sie zur Herstellung der Initiatorlösung durch Schmelzen in den flüssigen Aggregatzustand gebracht werden; dies erfolgt durch Erwärmen auf eine Temperatur, die 5 bis 10°C oberhalb des Schmelzpunktes des jeweiligen Kohlensäureesters liegt. Im allgemeinen reicht hierzu eine Temperatur von 35 bis 100, vorzugsweise von 45 bis 80°C aus.

Weiterhin sollte erfindungsgemäß die Entgasung unter Ausschluss von Sauerstoff oder unter Inertgas stattfinden, insbesondere unter Stickstoff.

Zusätzlich ist es für die Rückführung der Restmonomeren vorteilhaft, die Menge der Leichtsieder im Reaktionssystem - mit Ausnahme der eingesetzten Monomeren - zu begrenzen u.z. von 0,1 bis 15.000 ppm, vorzugsweise von 0,1 bis 2000 ppm und insbesondere von 0,1 bis 750 ppm.

Unter Leichtsiedern im Sinne der Erfindung wollen Verbindungen mit einem Siedepunkt < 160°C, vorzugsweise < 140°C und insbesondere < 120°C verstanden werden.

Die Molmasse derartiger Leichtsieder beträgt vorzugsweise < 400 g/mol, bevorzugt < 300 g/mol und insbesondere < 200 g/mol.

Vorzugsweise sind derartige Leichtsieder im System aprotische Lösungsmittel wie vorstehend unter b) bereits ausgeführt. Protische Lösungsmittel enthalten relativ bewegliche Protonen, die meinst an Sauerstoff, Stickstoff oder Schwefel gebunden sind. Bei den aprotischen Lösungsmitteln sind alle Wasserstoffatome an Kohlenstoff gebunden (s. F.A. Carey, R.J. Lundberg, Organische Chemie Verlag VCH 1995, S. 224).

Es ist jedoch nicht vorteilhaft, komplett auf protische Verbindungen zu verzichten, da protische Verbindungen die Polymerisation starten und beschleunigen können (wässrige Perchlorsäure dient als Reaktionsstarter), aber auch die Reaktion effektiv abbrechen können (TAD dient als Abbruchmittel und enthält geringe Mengen Wasser).

Durch die Kombination folgender erfindungsgemäßer Maßnahmen wird der Anteil an protischen Verbindungen im Reaktionsgemisch reduziert:
1. Als Kettenregler wird ein Formal verwendet, bevorzugt Methylal oder Butylal.
2. Als Lösungsmittel für das Abbruchmittel dient ein zyklisches Formal.
3. Als Lösungsmittel für den Starter dienen aprotische Verbindungen mit einem Siedepunkt > 160°C.
4. Alle Einsatzstoffe weisen einen Wasseranteil von höchstens 500 ppm auf.

Niedermolekulare protische Verbindungen werden somit im erfindungsgemäßen Verfahren lediglich über den Starter (z.B. wässrige Perchlorsäure), das Abbruchmittel (z.B. TAD) und das Restwasser in den Einsatzstoffen in die Reaktionsmischung eingebracht. Das Restwasser macht den größten Anteil an den erfindungsgemäß eingebrachten protischen Verbindungen aus.

### Beispiele

5 kg einer Mischung aus 96,495 Gew.-% flüssigem Trioxan, 3,5 Gew.-% Dioxolan und 0,005 Gew.-% Methylal wurden auf 160°C erwärmt und in einen Rohrreaktor mit statischen Mischern gepumpt. Der Restwassergehalt dieser Monomere betrug jeweils 0,05 %. Durch Zugabe von 0,5 ppm Perchlorsäure (als 0,01 gew.-%ige Lösung in Lösungsmittel A) startete man die Polymerisation, der Druck im Reaktor betrug 20 bar.

Nach einer Verweilzeit von 2 min wurde in der Abbruchzone des Reaktors Triacetondiamin als Abbruchmittel (als 0,05 gew.-%ige Lösung in Lösungsmittel B) eindosiert, so dass TAD im 5fachen Überschuss zur Perchlorsäure vorlag, und über einen statischen Mischer eingemischt.

Nach einer weiteren Verweilzeit von 3 min wurde das Produkt (Roh-POM) über ein Regelventil in einen Entgasungstopf auf einen Druck von 4 bar entspannt, wodurch die flüchtigen Komponenten von der Polymerschmelze abgetrennt wurden. In der Polymerschmelze verblieben Reste an Trioxan und Formaldehyd.

Die gasförmigen Monomere wurden aus dem Entgasungstopf über eine auf 130°C beheizte Rohrleitung - nachfolgend als Brüdenleitung bezeichnet - in einen Kondensator überführt und kondensiert. Das Kondensat wurde durch GC-MS-Messungen untersucht.

Die Schmelze wurde auf einem Extruder entgast, ausgetragen, im Wasserbad gekühlt und granuliert.

Der Anteil an niedermolekularen protischen Verbindungen in der Reaktionsmischung betrug somit:

| | |
|---|---|
| 500 ppm | (Restwasser der Monomere) |
| + 0,25 ppm | (aus der 70 %igen wässrigen Perchlorsäure) |
| + 2,5 ppm | (Triacetondiamin) |
| = 502,75 ppm | |

sowie - je nach Wahl der Lösungsmittel -

| | |
|---|---|
| + 5.000 ppm | Lösungsmittel B (z.B. Wasser, Methanol) |

Der Anteil an Leichtsiedern in der Reaktionsmischung beträgt - je nach Wahl der Lösungsmittel

| | |
|---|---|
| 5.000 ppm | Lösungsmittel A (z.B. 1,4-Dioxan, Cyclohexan) |

| Beispiel | Lösungsmittel A | Lösungsmittel B | Menge an Leichtsiedern | Menge an Protonendonatoren | Analyse des Kondensats | Belag in den Brüdenleitungen | Standzeit der Brüdenleitung |
|---|---|---|---|---|---|---|---|
| Erfindungsgemäß | Propylencarbonat | 1,3-Dioxolan | < 10 ppm | 503 ppm | Spuren von Lösungsmittel A | Keine Belagsbildung | > 240 h |
| Vergleichsbsp. 1 | Cyclohexan | 1,3-Dioxolan | 5.000 ppm | 503 ppm | Rückstände an Cyclohexan | Keine Belagsbildung | > 240 h |
| Vergleichsbsp. 2 | 1,4-Dioxan | 1,3-Dioxolan | 5.000 ppm | 503 ppm | Rückstände an 1,4-Dioxan | Keine Belagsbildung | > 240 h |
| Vergleichsbsp. 3 | 1,4-Dioxan | Methanol | 5.000 ppm | 5.500 ppm | Rückstände an 1,4-Dioxan | Starke Belagsbildung | 10 h |
| Vergleichsbsp. 4 | 1,4-Dioxan | Wasser | 5.000 ppm | 5.500 ppm | Rückstände an 1,4-Dioxan | Sehr starke Belagsbildung | 2 h |

Die Vergleichsbeispiele 1 bis 4 zeigen im Monomer-Kondensat erhebliche Rückstände an 1,4-Dioxan bzw. Cyclohexan. Vor einer Rezyklierung der Monomere muss dieses aufwendig abgetrennt werden.

Die Vergleichsbeispiele 3 und 4, bei denen > 5.000 ppm Protonendonatoren vorliegen, zeigen ferner Belagsbildungen in den Brüdenleitungen und eine deutlich herabgesetzte Standzeit.

Bei einer erfindungsgemäßen Begrenzung von Leichtsiedern und Protonendonatoren ergeben sich eine hohe Standzeit in Kombination mit hochreinem Kondensat.

## Patentansprüche

1. Verfahren zur Herstellung von Polyoxymethylenen durch kationische Polymerisation der Monomeren a) in Gegenwart von Initiatoren b) sowie gegebenenfalls in Gegenwart von Reglern c) und anschließender Desaktivierung und Abtrennung des Polymeren, **dadurch gekennzeichnet, dass** bei der gesamten Polymerisation die gesamte Menge der Protonendonatoren kleiner 5.000 ppm beträgt und die Menge der Leichtsieder bei der gesamten Polymerisation - mit Ausnahme der eingesetzten Monomeren - 0,1 bis 15.000 ppm beträgt.

2. Verfahren nach Anspruch 1, **dadurch gekennzeichnet, dass** die Protonendonatoren ein Molgewicht < 250 g/mol aufweisen.

3. Verfahren nach den Ansprüchen 1 oder 2, **dadurch gekennzeichnet, dass** man Protonendonatoren mit mindestens einer OH-Gruppe einsetzt.

4. Verfahren nach den Ansprüchen 1 bis 3, **dadurch gekennzeichnet, dass** die gesamte Menge der Protonendonatoren 0,1 bis 2.000 ppm beträgt.

5. Verfahren nach den Ansprüchen 1 bis 4, **dadurch gekennzeichnet, dass** die Gruppe der Protonendonatoren ausgewählt ist aus der Gruppe der aliphatischen oder aromatischen Alkohole, Wasser oder Wasser enthaltende Lösungen von Reaktanden, Säuren oder deren Mischungen.

6. Verfahren nach den Ansprüchen 1 bis 5, **dadurch gekennzeichnet, dass** man die Restmonomeren entfernt und in den Polymerisationsreaktor oder in die Monomeranlage zurückführt.

7. Verfahren nach den Ansprüchen 1 bis 6, **dadurch gekennzeichnet, dass** die Leichtsieder aprotisch sind.

8. Verfahren nach den Ansprüchen 1 bis 7, **dadurch gekennzeichnet, dass** die Leichtsieder eine Molmasse < 400 g/mol aufweisen.

9. Verfahren nach den Ansprüchen 1 bis 8, **dadurch gekennzeichnet, dass** die Leichtsieder einen Siedepunkt < 160°C aufweisen.

## Claims

1. A process for the preparation of polyoxymethylenes by cationic polymerization of the monomers a) in the presence of initiators b) and, if appropriate, in the presence of regulators c) and subsequent deactivation and isolation of the polymer, wherein the total amount of proton donors is less than 5000 ppm in the entire polymerization and the amount of low boilers in the entire polymerization - with the exception of the monomers used - is from 0.1 to 15 000 ppm.

2. The process according to claim 1, wherein the proton donors have a molecular weight of < 250 g/mol.

3. The process according to either of claims 1 and 2, wherein proton donors having at least one OH group are used.

4. The process according to any of claims 1 to 3, wherein the total amount of proton donors is from 0.1 to 2000 ppm.

5. The process according to any of claims 1 to 4, wherein the group consisting of the proton donors is selected from the group consisting of the aliphatic or aromatic alcohols, water or water-comprising solutions of reactants, acids or mixtures thereof.

6. The process according to any of claims 1 to 5, wherein the residual monomers are removed and are recycled to the polymerisation reactor or to the monomer unit.

7. The process according to any of claims 1 to 6, wherein the low boilers are aprotic.

8. The process according to any of claims 1 to 7, wherein the low boilers have a molar mass of < 400 g/mol.

9. The process according to any of claims 1 to 8, wherein the low boilers have a boiling point of < 160°C.

## Revendications

1. Procédé pour la préparation de polyoxyméthylènes par polymérisation cationique des monomères a) en présence d'initiateurs b) ainsi que le cas échéant en présence d'agents de régulation c) et désactivation et séparation consécutives du polymère, **caractérisé en ce que** lors de la polymérisation complète, la quantité totale des donneurs de protons est inférieure à 5000 ppm et la quantité de substances à bas point d'ébullition lors de la polymérisation complète - à l'exception des monomères utilisés - est de 0,1 à 15 000 ppm.

2. Procédé selon la revendication 1, **caractérisé en ce que** les donneurs de protons présentent un poids molaire < 250 g/mole.

3. Procédé selon les revendications 1 ou 2,
**caractérisé en ce qu'**on utilise des donneurs de protons présentant au moins un groupe OH.

4. Procédé selon les revendications 1 à 3,
**caractérisé en ce que** la quantité totale de donneurs de protons est de 0,1 à 2000 ppm.

5. Procédé selon les revendications 1 à 4,
**caractérisé en ce que** le groupe de donneurs de protons est choisi dans le groupe des alcools aliphatiques ou aromatiques, de l'eau ou des solutions contenant de l'eau, des réactifs, des acides ou leurs mélanges.

6. Procédé selon les revendications 1 à 5,
**caractérisé en ce qu'**on élimine les monomères résiduels et on les recycle dans le réacteur de polymérisation ou dans l'installation de monomères.

7. Procédé selon les revendications 1 à 6,
**caractérisé en ce que** les substances à bas point d'ébullition sont aprotiques.

8. Procédé selon les revendications 1 à 7,
**caractérisé en ce que** les substances à bas point d'ébullition présentent une masse molaire < 400 g/mole.

9. Procédé selon les revendications 1 à 8,
**caractérisé en ce que** les substances à bas point d'ébullition présentent un point d'ébullition < 160°C.
